# EUROPEAN PATENT APPLICATION

(11) **EP 2 408 131 A1**
(43) Date of publication of application: **18.01.2012**
(21) Application number: 10750642.0
(22) Date of filing: 12.02.2010
(51) Int. Cl.: H04J 99/00, H04B 7/04, H04J 11/00, H04W 16/28, H04W 24/02

(54) **COMMUNICATION SYSTEM AND MOBILE STATION APPARATUS**

(30) Priority: 12.03.2009 JP 2009058810
(71) Applicant: Sharp Kabushiki Kaisha, Osaka-shi, Osaka 545-8522 (JP)
(72) Inventor: YAMADA, Shohei, Osaka 545-8522 (JP); SHIMEZAWA, Kazuyuki, Osaka 545-8522 (JP); NOGAMI, Toshizo, Osaka 545-8522 (JP); SUZUKI, Shoichi, Osaka 545-8522 (JP); HIRAKAWA, Isao, Osaka 545-8522 (JP); KATO, Yasuyuki, Osaka 545-8522 (JP); AIBA, Tatsushi, Osaka 545-8522 (JP)
(74) Representative: Müller - Hoffmann & Partner
(86) International application number: PCT/JP2010/052030
(87) International publication number: WO 2010/103886

(57) **Abstract**

A mobile communication system comprised of one or a plurality of base station apparatuses and a mobile station apparatus; **characterized in that** the one or plurality of base station apparatuses positions one or a plurality of logical antenna port reference signals, which are inside one or a plurality of logical antenna ports respectively, to different sub-frames; and the mobile station apparatus uses the logical antenna port reference signals of the one or plurality of logical antenna ports to perform channel status measurement.

## Description

### TECHNICAL FIELD

The present invention relates to a communication system and a mobile station apparatus and more particularly to a communication system including multi-antenna transmissions/receptions of different orders and a mobile station apparatus used for the communication system.

### BACKGROUND ART

3GPP (3rd Generation Partnership Project) is a project for discussing/creating specifications of a portable telephone system based on a network developed from W-CDMA (Wideband-Code Division Multiple Access) and GSM (Global System for Mobile Communications).

3GPP has standardized the W-CDMA mode as a third-generation cellular mobile communication mode and the service has been sequentially started. HSDPA (High-Speed Downlink Packet Access) with higher communication speed has also been standardized and the service has been started.

3GPP is currently discussing about a mobile communication system (hereinafter, LTE-A (Long Term Evolution-Advanced) or Advanced-EUTRA) that utilizes the development of the third generation wireless access technology (referred to as LTE (Long Term Evolution) or EUTRA (Evolved Universal Terrestrial Radio Access)) and a wider system bandwidth to realize faster data transmission/reception.

The OFDMA (Orthogonal Frequency Division Multiple Access) mode is a mode using subcarriers orthogonal to each other to perform user-multiplexing and is proposed as the downlink communication mode in EUTRA.

Technologies applied to the OFDMA mode include an adaptive modulation/demodulation error correcting system (AMCS: adaptive modulation and coding scheme) based on adaptive radio link control (Link Adaptation) of channel encoding etc.

AMCS is a scheme of switching wireless transmission parameters (also referred to as AMC modes) such as an error-correcting mode, an encoding ratio of error correction, and a data modulation multiple-valued number depending on channel qualities of mobile station apparatuses so as to efficiently perform high-speed packet data transmission.

The channel qualities of the respective mobile station apparatuses are fed back to a base station apparatus by using CQI (Channel Quality Indicator).

In OFDMA, a communication available area can physically be divided in the frequency domain and the time domain corresponding to sub-carriers. These divided areas bundled into several blocks, which are referred to as physical resource blocks, and one or some physical resource blocks are allocated to each mobile station apparatus to perform communication with a plurality of mobile station apparatuses multiplexed. To perform communications at optimal quality/speed depending on requests between a base station apparatus and respective mobile station apparatuses, the allocation to physical resource blocks and the transmission modes must be determined in consideration of the channel qualities of frequency bands corresponding to respective sub-carriers in the respective mobile station apparatuses. Since the transmission modes and the scheduling are determined by the base station apparatus, each of the mobile station apparatuses feeds back a channel quality of each frequency range to the base station apparatus to implement this request. If needed, information is further fed back to the base station apparatus to indicate a frequency range (e.g., having a good channel quality) selected by each of the mobile station apparatuses.

It is proposed for EUTRA to utilize transmitter diversity such as SDM (Space Division Multiplexing), SFBC (Space-Frequency Block Diversity), and CDD (Cycle Delay Diversity) utilizing MIMO (Multiple InputMultiple Output) so as to increase a communication channel capacity. MIMO is a collective term for multi-input multi-output systems or techniques and is **characterized in that** a plurality of antennas is used on the transmission and reception sides to perform transmission with a plurality of branches of input/output of electric waves. A unit of signal sequence transmittable in a spatially multiplexed manner utilizing the MIMO mode is referred to as a stream. The number of streams (Rank) at the time of MIMO communication is determined by a base station apparatus in consideration of a channel state. The number of streams (Rank) requested by a mobile station apparatus is fed back from the mobile station apparatus to the base station apparatus by using RI (Rank Indicator).

It is also discussed that transmission signal sequence is preprocessed in advance when SDM is utilized in downlink, so as to correctly demultiplex information of a plurality of streams transmitted from antennas (this is referred to as "precoding"). The information of the precoding can be calculated based on a channel state estimated by a mobile station apparatus and is fed back from a mobile station apparatus to the base station apparatus by using PMI (Precording Matrix Indicator).

To implement communications in optimal quality, it is considered that each mobile station apparatus must feed back various pieces of information indicative of a channel state to a base station apparatus as described above. This channel state information is made up of CQI, PMI, RI, etc. The numbers of bits and the formats of these pieces of the channel state information are specified by the base station apparatuses to the mobile station apparatus depending on the situations.

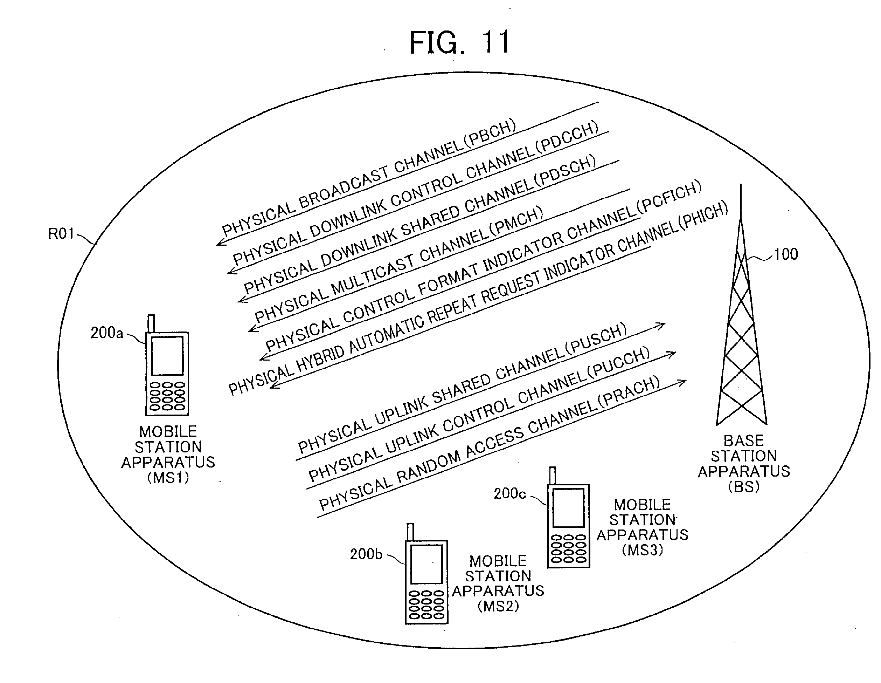

Fig. 11 is a diagram of a channel configuration used in a conventional wireless communication system. This channel configuration is used in a wireless communication system such as EUTRA (see Nonpatent Literature 1). A wireless communication system depicted in Fig. 11 includes a base station apparatus 100, mobile station apparatuses 200a, 200b, and 200c. R01 indicates a communicable range of the base station apparatus 100 and the base station apparatus 100 communicates with mobile station apparatuses located within this range R01.

In EUTRA, the downlink for transmitting signals from the base station apparatus 100 to the mobile station apparatuses 200a to 200c uses a physical broadcast channel (PBCH), a physical downlink control channel (PDCCH), a physical downlink shared channel (PDSCH), a physical multicast channel (PMCH), a physical control format indicator channel (PCFICH), and a physical hybrid ARQ indicator channel (PHICH).

In EUTRA, the uplink for transmitting signals from the mobile station apparatuses 200a to 200c to the base station apparatus 100 uses a physical uplink shared channel (PUSCH), a physical uplink control channel (PUCCH), and a physical random access channel (PRACH).

On the other hand, Advanced-EUTRA follows the basic system of EUTRA. While EUTRA uses the MIMO mode with one to four logical antenna ports, Advanced-EUTRA implements a higher-order MIMO mode with one to eight logical antenna ports. It is also discussed to introduce coordinatedmultipoint (CoMP) communication that utilizes not only the MIMO mode implemented in one cell but also logical antenna ports of a plurality of cells for communication.

### PRIOR ART DOCUMENT

### NONPATENT LITERATURE

Nonpatent Literature 1: 3GPP TS (Technical Specification) 36.300, V8.7.0 (2008-12), Technical Specification Group Radio Access Network, Evolved Universal Terrestrial Radio Access (E-UTRA) and Evolved Universal Terrestrial Radio Access Network (E-UTRAN); Overall description; Stage 2 (Release 8)

### SUMMARY OF THE INVENTION

### PROBLEM TO BE SOLVED BY THE INVENTION

However, if the MIMO mode using one to eight logical antenna ports is introduced in a conventionally known wireless communication system, it is required to efficiently add a downlink reference signal for measuring a channel state and a downlink reference signal for a demodulation process of the higher-order MIMO while minimizing the effect on mobile station apparatuses operating in an EUTRA system. If a mobile station apparatus operating in an Advanced-EUTRA system performs communication in the higher-order MIMO mode, it is required to generate channel state information for feedback in an efficient procedure.

The present invention was conceived in view of the situations and it is therefore an object of the present invention to provide a communication system and a mobile station apparatus capable of generating the channel state information in an efficient procedure when a mobile station apparatus communicating in a higher-order MIMO mode is introduced into a system capable of communicating in a lower-order MIMO mode and of promptly performing communication while minimizing the effect on mobile station apparatuses operating in the lower-order MIMO mode.

A first technical means of the present invention is a mobile communication system comprised of a base station apparatus and a mobile station apparatus, wherein the one or more base station apparatuses dispose a reference signal of each one or more logical antenna ports of one or more logical antenna ports in different sub-frames, the mobile station apparatus measures a channel state by using a reference signal of each logical antenna port of the one or more logical antenna ports to.

A second technical means of the present invention is a mobile communication system comprised of a base station apparatus and a mobile station apparatus, wherein the base station apparatus broadcasts number of logical antenna ports, the mobile station apparatus identifies a sub-frame disposed with a reference signal of each logical antenna port of one or more logical antenna ports from the broadcasted number of logical antenna ports.

A third technical means of the present invention is a mobile station apparatus in a mobile communication system comprised of a base station apparatus and the mobile station apparatus, wherein a reference signal of each one or more logical antenna ports of one or more logical antenna ports being disposed in different sub-frames, the mobile station apparatus measures a channel state by using a reference signal of each logical antenna port of the one or more logical antenna ports to.

A fourth technical means of the present invention is a mobile station apparatus in a mobile communication system comprised of a base station apparatus and the mobile station apparatus, wherein a reference signal of each one or more logical antenna ports of one or more logical antenna ports being disposed in different sub-frames, the mobile station apparatus identifies a sub-frame disposed with a reference signal of each logical antenna port of the one or more logical antenna ports from number of logical antenna ports broadcasted from the base station apparatus.

### EFFECT OF THE INVENTION

The communication system and the mobile station apparatus of the present invention is capable of generating the channel state information in an efficient procedure when a mobile station apparatus communicating in a higher-order MIMO mode is introduced into a system capable of communicating in a lower-order MIMO mode and of promptly performing communication while minimizing the effect on mobile station apparatuses operating in the lower-order MIMO mode.

### BRIEF DESCRIPTION OF DRAWINGS

[Fig. 1] Fig. 1 is a diagram of a configuration of downlink channels used in a communication system according to a first embodiment of the present invention.
[Fig. 2] Fig. 2 is a diagram of a configuration of uplink channels used in the communication system according to the first embodiment of the present invention.
[Fig. 3] Fig. 3 is a diagram of a wireless frame used in downlink according to the first embodiment of the present invention of the present invention.
[Fig. 4] Fig. 4 is a general block diagram of a configuration of a base station apparatus according to the first embodiment of the present invention.
[Fig. 5] Fig. 5 is a general block diagram of a configuration of a mobile station apparatus according to the first embodiment of the present invention.
[Fig. 6] Fig. 6 is a diagram of a downlink reference signal according to the first embodiment of the present invention.
[Fig. 7] Fig. 7 is a diagram of a disposition example of CQI-RS in a resource block according to the first embodiment of the present invention.
[Fig. 8] Fig. 8 is a conceptual diagram of addition of CQI-RS and DM-RS according to the first embodiment of the present invention.
[Fig. 9] Fig. 9 is a diagram of an example of a method of measuring channel state information according to the first embodiment of the present invention.
[Fig. 10] Fig. 10 is a diagram of another example of the method of measuring channel state information according to the first embodiment of the present invention.
[Fig. 11] Fig. 11 is a diagram of a channel configuration used in a conventional wireless communication system.

### MODES FOR CARRYING OUT THE INVENTION

Embodiments of the present invention will now be described with reference to the drawings.

A first embodiment of the present invention will be described. A wireless communication system according to the first embodiment of the present invention includes, and performs wireless communication between, one or more base station apparatuses and one or more mobile station apparatuses. One base station apparatus makes up one or more cells and one cell can contain one or more mobile station apparatuses.

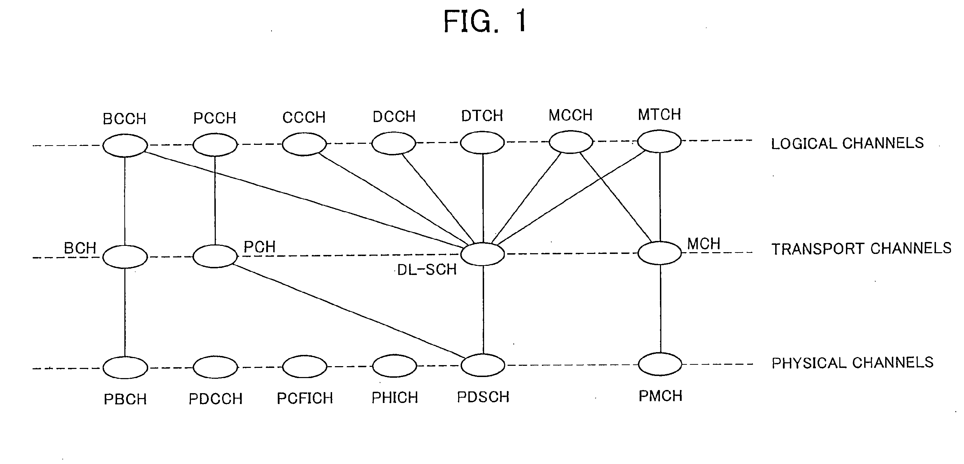

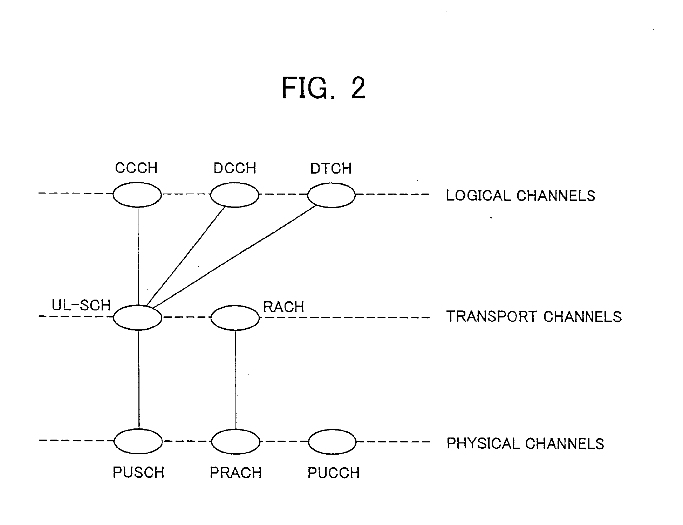

Fig. 1 is a diagram of a configuration of downlink channels used in a communication system according to a first embodiment of the present invention. Fig. 2 is a diagram of a configuration of uplink channels used in the communication system according to the first embodiment of the present invention. The downlink channels depicted in Fig. 1 and the uplink channels depicted in Fig. 2 are both made up of logical channels, transport channels, and physical channels.

The logical channels define types of data transmission services transmitted/received through a medium access control (MAC) layer. The transport channels define what characteristics the data transmitted by wireless interfaces have and how the data are transmitted. The physical channels are physical channels that carry the transport channels.

The downlink logical channels include a broadcast control channel (BCCH), a paging control channel (PCCH), a common control channel (CCCH), a dedicated control channel (DCCH), a dedicated traffic channel (DTCH), a multicast control channel (MCCH), and a multicast traffic channel (MTCH). The uplink logical channels include the common control channel (CCCH), the dedicated control channel (DCCH), and the dedicated traffic channel (DTCH).

The downlink transport channels include a broadcast channel (BCH), a paging channel (PCH), a downlink shared channel (DL-SCH), and a multicast channel (MCH). The uplink transport channels include an uplink shared channel (UL-SCH) and a random access channel (RACH).

The downlink physical channels include a physical broadcast channel (PBCH), a physical downlink control channel (PDCCH), a physical downlink shared channel (PDSCH), a physical multicast channel (PMCH), a physical control format indicator channel (PCFICH), and a physical hybrid ARQ indicator channel (PHICH). The uplink physical channels include a physical uplink shared channel (PUSCH), a physical random access channel (PRACH), and a physical uplink control channel (PUCCH).

These channels are transmitted/received between the base station apparatus and the mobile station apparatuses as depicted in Fig. 11 described in terms of a conventional technology.

The logical channels will then be described. The broadcast control channel (BCCH) is a downlink channel used for broadcasting system information. The paging control channel (PCCH) is a downlink channel used for transmitting paging information and is used when a network does not know a cell position of a mobile station apparatus.

The common control channel (CCCH) is a channel used for transmitting control information between a mobile station apparatus and a network and is used by a mobile station apparatus not having radio resource control (RRC) connection with the network.

The dedicated control channel (DCCH) is a point-to-point bidirectional channel and is a channel utilized for transmitting individual control information between a mobile station apparatus and the network. The dedicated control channel (DCCH) is used by a mobile station apparatus having the RRC connection.

The dedicated traffic channel (DTCH) is a point-to-point bidirectional channel dedicated to one mobile station apparatus and is utilized for transferring user information (unicast data).

The multicast control channel (MCCH) is a downlink channel used for performing point-to-multipoint transmission of MBMS (Multimedia Broadcast Multicast Service) control information from a network to a mobile station apparatus. This is used in the MBMS service providing a service in a point-to-multipoint manner.

MBMS service transmitting methods include single-cell point-to-multipoint (SCPTM) transmission and multimedia broadcast multicast service single frequency network (MBSFN) transmission. The MBSFN transmission is a concurrent transmission technique realized by concurrently transmitting an identifiable waveform (signal) from a plurality of cells. On the other hand, the SCPTM transmission is a method of transmitting the MBMS service by one base station apparatus.

The multicast control channel (MCCH) is utilized for one or more multicast traffic channels (MTCH). The multicast traffic channel (MTCH) is a downlink channel used for performing point-to-multipoint transmission of traffic data (MBMS transmission data) from a network to a mobile station apparatus.

The multicast control channel (MCCH) and the multicast traffic channel (MTCH) are utilized only by a mobile station apparatus that receives MBMS.

The transport channels will be described. The broadcast channel (BCH) is broadcasted to the entire cell in accordance with a fixed and preliminarily defined transmission format. The downlink shared channel (DL-SCH) supports HARQ (Hybrid Automatic Repeat Request), the dynamic adaptive radio link control, the discontinuous reception (DRX), and the MBMS transmission and must be broadcasted to the entire cell.

The downlink shared channel (DL-SCH) can utilize the beamforming and supports dynamic resource allocation and quasi-static resource allocation. The paging channel (PCH) supports DRX and must be broadcasted to the entire cell.

The paging channel (PCH) is mapped to a physical resource dynamically used with traffic channels or other control channels, i.e., the physical downlink shared channel (PDSCH).

The multicast channel (MCH) must be broadcasted to the entire cell. The multicast channel (MCH) supports quasi-static resource allocation such as MBSFN (MBMS Single Frequency Network) combining of the MBMS transmissions from a plurality of cells and a time frame using the extended cyclic prefix (CP).

The uplink shared channel (UL-SCH) supports HARQ and the dynamic adaptive radio link control. The uplink shared channel (UL-SCH) can utilize the beamforming. The dynamic resource allocation and the quasi-static resource allocation are supported. The random access channel (RACH) transmits limited control information and has a risk of collision.

The physical channels will be described. The physical broadcast channel (PBCH) maps the broadcast channel (BCH) at intervals of 40 milliseconds. Blind detection is performed for the timing of 40 milliseconds. Therefore, explicit signaling may not be performed for the presentation of the timing. A sub-frame including the physical broadcast channel (PBCH) can be decoded by itself (self-decodable).

The physical downlink control channel (PDCCH) is a channel used for notifying a mobile station apparatus of the resource allocation of the downlink shared channel (PDSCH), the hybrid automatic repeat request (HARQ) information for the downlink data, and the uplink transmission permission (uplink grant) that is the resource allocation of the physical uplink shared channel (PUSCH).

The physical downlink shared channel (PDSCH) is a channel used for transmitting the downlink data or the paging information. The physical multicast channel (PMCH) is a channel utilized for transmitting the multicast channel (MCH), and a downlink reference signal, an uplink reference signal, and a physical downlink synchronization signal are separately disposed.

The physical uplink shared channel (PUSCH) is a channel mainly used for transmitting the uplink data (UL-SCH). If the base station apparatus 100 schedules the mobile station apparatus 200, the physical uplink shared channel (PUSCH) is also used for transmitting the channel state information (a downlink channel quality indicator CQI, a precoding matrix indicator PMI, and a rank indicator RI) and HARQ acknowledgement (ACK)/negative acknowledgement (NACK) for downlink transmission.

The physical random access channel (PRACH) is a channel used for transmitting a random access preamble and has a guard time. The physical uplink control channel (PUCCH) is a channel used for transmitting the channel state information (CQI, PMI, and RI), a scheduling request (SR), and HARQ acknowledgement/negative acknowledgement for downlink transmission.

The physical control format indicator channel (PCFICH) is a channel utilized for notifying a mobile station apparatus of an OFDM symbol number used for the physical downlink control channel (PDCCH) and is transmitted in respective sub-frames.

The physical hybrid automatic repeat request indicator channel (PHICH) is a channel utilized for transmitting HARQ ACK/NACK for uplink transmission.

The downlink reference signal (DL-RS) is a pilot signal transmitted with a predetermined electric power for each cell. The downlink reference signal is a signal periodically repeated at predetermined time intervals (e.g., one frame) and a mobile station apparatus receives the downlink reference signal at predetermined time intervals and measures and uses a channel state (reception quality) for determining a channel state for each cell. The downlink reference signal is also used as a reference signal for demodulating the downlink data transmitted concurrently with the downlink reference signal. A sequence used for the downlink reference signal may be any sequence as long as a sequence is uniquely identifiable for each cell.

The channel mapping by the communication system according to the first embodiment of the present invention will be described.

As depicted in Fig. 1, the transport channels and the physical channels are mapped in the downlink as follows. The broadcast channel (BCH) is mapped to the physical broadcast channel (PBCH).

The multicast channel (MCH) is mapped to the physical multicast channel (PMCH). The paging channel (PCH) and the downlink shared channel (DL-SCH) are mapped to the physical downlink shared channel (PDSCH).

The physical downlink control channel (PDCCH), the physical hybrid automatic repeat request indicator channel (PHICH), and the physical control format indicator channel (PCFICH) are independently used in the physical channels.

On the other hand, the transport channels and the physical channels are mapped in the uplink as follows. The uplink shared channel (UL-SCH) is mapped to the physical uplink shared channel (PUSCH).

The random access channel (RACH) is mapped to the physical random access channel (PRACH). The physical uplink control channel (PUCCH) is independently used in the physical channels.

The logical channels and the transport channels are mapped in the downlink as follows. The paging control channel (PCCH) is mapped to the paging channel (PCH).

The broadcast control channel (BCCH) is mapped to the broadcast channel (BCH) and the downlink shared channel (DL-SCH). The common control channel (CCCH), the dedicated control channel (DCCH), and the dedicated traffic channel (DTCH) are mapped to the downlink shared channel (DL-SCH).

The multicast control channel (MCCH) is mapped to the downlink shared channel (DL-SCH) and the multicast channel (MCH). The multicast traffic channel (MTCH) is mapped to the downlink shared channel (DL-SCH) and the multicast channel (MCH).

The mapping from the multicast control channel (MCCH) and the multicast traffic channel (MTCH) to the multicast channel (MCH) is performed at the time of the MBSFN transmission while these channels are mapped to the downlink shared channel (DL-SCH) at the time of the SCPTM transmission.

On the other hand, the logical channels and the transport channels are mapped in the uplink as follows. The common control channel (CCCH), the dedicated control channel (DCCH), and the dedicated traffic channel (DTCH) are mapped to the uplink shared channel (UL-SCH). The random access channel (RACH) is not mapped to a logical channel.

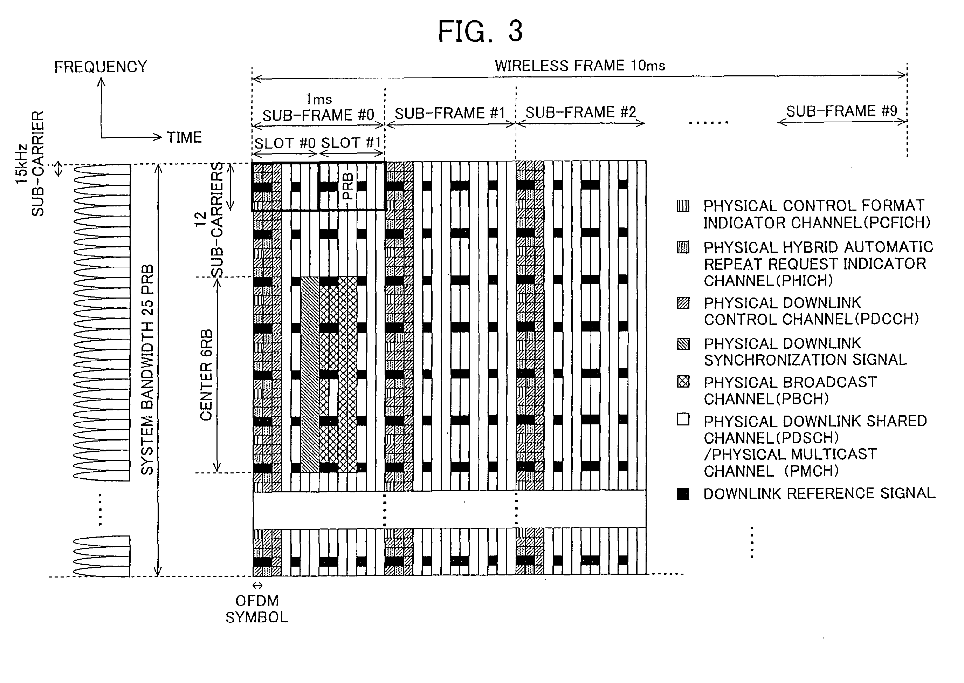

Fig. 3 is a diagram of a frame configuration used in downlink of the communication system according to the first embodiment of the present invention. In Fig. 3, the horizontal axis indicates time and the vertical axis indicates frequency.

A wireless frame is identified by the system frame number (SFN) and consists of 10 milliseconds (10 ms). One sub-frame consists of one millisecond (1 ms) and the wireless frame includes 10 sub-frames #F0 to #F9.

As depicted in Fig. 3, a wireless frame used in downlink is disposed with the physical control format indicator channel (PCFICH), the physical hybrid automatic repeat request indicator channel (PHICH), the physical downlink control channel (PDCCH), the physical downlink synchronization signal, the physical broadcast channel (PBCH), the physical downlink shared channel (PDSCH) /the physical multicast channel (PMCH), and the downlink reference signal.

A wireless frame used in uplink is disposed with the physical random access channel (PRACH), the physical uplink control channel (PUCCH), the physical uplink shared channel (PUSCH), an uplink demodulation reference signal, and an uplink sounding reference signal.
One sub-frame (e.g., the sub-frame #F0) is divided into two slots #S0 and #S1. If a normal cyclic prefix (normal CP) is used, a downlink slot is made up of seven OFDM symbols (see Fig. 3) and an uplink slot is made up of seven SC-FDMA (Single Carrier-Frequency Division Multiple Access) symbols.

If a long CP (also referred to as an extended CP) is used, a downlink slot is made up of six OFDM symbols and an uplink slot is made up of six SC-FDMA symbols.

One slot is divided into a plurality of blocks in the frequency direction. Twelve 15-kHz sub-carriers are defined as a unit in the frequency direction to make up one physical resource block (PRB). The number of the physical resource blocks (PRBs) from 6 to 110 is supported depending on a system bandwidth. Fig. 3 depicts the case that the number of the physical resource blocks (PRBs) is 25. Different respective system bandwidths can be used in uplink and downlink. Aggregation can be used to form 110 or more physical resource blocks in the entire system bandwidth. A component carrier is normally made up of 100 physical resource blocks and five component carriers can be used with a guard band interposed between the component carriers to form the entire system bandwidth of 500 physical resource blocks. Representing in terms of bandwidth, for example, a component carrier consists of 20 MHz and five component carriers can be used with a guard band interposed between the component carriers to form the entire system bandwidth of 100 MHz.

The resource allocation in downlink and uplink is performed on the basis of a sub-frame in the time direction and on the basis of the physical resource block (PRB) in the frequency direction. Therefore, two slots in a sub-frame are allocated with one resource allocation signal.

A unit made up of a sub-carrier and an OFDM symbol or a sub-carrier and an SC-FDMA symbol is referred to as a resource element (RE). A resource mapping process in a physical layer maps a modulation symbol etc., to each resource element.

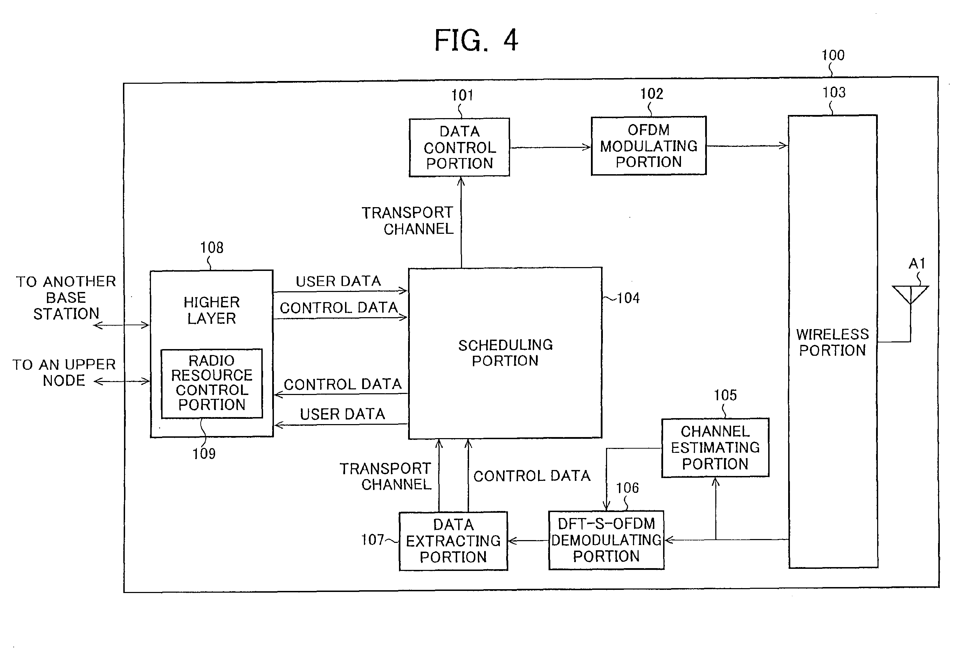

Fig. 4 is a general block diagram of a configuration of the base station apparatus 100 according to the first embodiment of the present invention. The base station apparatus 100 includes a data control portion 101, an OFDM modulating portion 102, a wireless portion 103, a scheduling portion 104, a channel estimating portion 105, a DFT-S-OFDM (DFT-Spread-OFDM) demodulating portion 106, a data extracting portion 107, a higher layer 108, and an antenna portion A1.

A receiving portion is made up of the wireless portion 103, the scheduling portion 104, the channel estimating portion 105, the DFT-S-OFDM demodulating portion 106, the data extracting portion 107, the higher layer 108, and the antenna portion A1. A transmitting portion is made up of the data control portion 101, the OFDM modulating portion 102, the wireless portion 103, the scheduling portion 104, the higher layer 108, and the antenna portion A1. Each of the receiving portion and the transmitting portion is partially configured to separately execute a process for each component carrier and is partially configured to execute a common process between component carriers.

The antenna portion A1, the wireless portion 103, the channel estimating portion 105, the DFT-S-OFDM demodulating portion 106, and the data extracting portion 107 execute processes of an uplink physical layer. The antenna portion A2, the data control portion 101, the OFDM modulating portion 102, and the wireless portion 103 execute processes of a downlink physical layer.

The data control portion 101 acquires the transport channels from the scheduling portion 104. The data control portion 101 maps the transport channels as well as signals and channels generated in the physical layer based on the scheduling information input from the scheduling portion 104, to the physical channels based on the scheduling information input from the scheduling portion 104. The data mapped as described above are output to the OFDM modulating portion 102.

The OFDM modulating portion 102 executes the encoding, the data modulation, the input signal serial/parallel conversion, the IFFT (Inverse Fast Fourier Transform) process, and the insertion of cyclic prefix (CP) as well as the OFDM signal processes such as filtering for the data input from the data control portion 101 to generate and output an OFDM signal to the wireless portion 103 based on the scheduling information input from the scheduling portion 104 (including downlink physical resource block (PRB) allocation information (e.g., physical resource block position information such as frequency and time), and a modulation mode and an encoding mode corresponding to each downlink physical resource block (PRB) (e.g., 16QAM modulation, 2/3 coding rate)).

The wireless portion 103 up-converts the modulated data input from the OFDM modulating portion 102 to a wireless frequency to generate and transmit a wireless signal via the antenna portion A1 to the mobile station apparatus 200. The wireless portion 103 receives an uplink wireless signal from the mobile station apparatus 200 via the antenna portion A1 and down-converts the signal to a baseband signal to output the reception data to the channel estimating portion 105 and the DFT-S-OFDM demodulating portion 106.

The scheduling portion 104 executes a process of a medium access control (MAC) layer. The scheduling portion 104 performs the mapping of the logical channels and the transport channels, the scheduling of the downlink and the uplink (such as HARQ process and selection of a transport format), etc. Since the scheduling portion 104 integrally controls the processing portions of the respective physical layers, interfaces exist between the scheduling portion 104 and the antenna portion A1, the wireless portion 103, the channel estimating portion 105, the DFT-S-OFDM demodulating portion 106, the data control portion 101, the OFDM modulating portion 102, and the data extracting portion 107. However, not depicted.

In the scheduling of the downlink, the scheduling portion 104 executes the selection process of a downlink transport format (transmission form) for modulating respective data (allocation of physical resource blocks (PRB) and a modulating mode and an encoding mode, etc.) and the generation of the scheduling information used in the retransmission control in HARQ and the downlink scheduling, based on feedback information received from the mobile station apparatus 200 (a downlink channel state information (channel quality (CQI), the number of streams (RI), precoding information (PMI), etc.) and ACK/NACK feedback information for downlink data), the information of usable downlink physical resource blocks (PRB) of the respective mobile station apparatuses, a buffer status, the scheduling information input from the higher layer 108, etc. The scheduling information used for the downlink scheduling is output to the data control portion 101 and the data extracting portion 107.

In the scheduling of the uplink, the scheduling portion 104 executes the selection process of an uplink transport format (transmission form) for modulating respective data (allocation of physical resource blocks (PRB) and a modulating mode and an encoding mode, etc.) and the generation of the scheduling information used in the uplink scheduling, based on an estimation result of an uplink channel state (wireless propagation channel state) output by the channel estimating portion 105, a resource allocation request from the respective mobile station apparatus 200, information of usable downlink physical resource blocks (PRB) of the mobile station apparatuses 200, the scheduling information input from the higher layer 108, etc.

The scheduling information used for the uplink scheduling is output to the data control portion 101 and the data extracting portion 107.

The scheduling portion 104 maps the downlink logical channels input from the higher layer 108 to the transport channels before outputs to the data control portion 101. The scheduling portion 104 processes the control data acquired through the uplink and the transport channels input from the data extracting portion 107 as needed and maps the control data and the transport channels to the uplink logical channels before outputs to the higher layer 108.

The channel estimating portion 105 estimates an uplink channel state from an uplink demodulation reference signal (DRS) for the demodulation of uplink data and outputs the estimation result to the DFT-S-OFDM demodulating portion 106. The channel estimating portion 105 also estimates an uplink channel state from an uplink sounding reference signal (SRS) for scheduling the uplink and outputs the estimation result to the scheduling portion 104.

Although it is assumed that the communication mode of the uplink is a single carrier mode such as DFT-S-OFDM, a multicarrier mode such as OFDM mode may also be used.

Based on the uplink channel state estimation result input from the channel estimating portion 105, the DFT-S-OFDM demodulating portion 106 executes DFT-S-OFDM signal processes such as DFT (Discrete Fourier Transform) transform, sub-carrier mapping, IFFT transform, and filtering for the modulated data input from the wireless portion 103 to execute the demodulating process before outputs to the data extracting portion 107.

The data extracting portion 107 confirms the correctness of the data input from the DFT-S-OFDM demodulating portion 106 based on the scheduling information from the scheduling portion 104 and outputs the confirmation result (acknowledgement signal ACK/negative acknowledgement signal NACK) to the scheduling portion 104.

The data extracting portion 107 divides the data input from the DFT-S-OFDM demodulating portion 106 into the transport channels and the physical layer control data based on the scheduling information from the scheduling portion 104 before outputs to the scheduling portion 104.

The divided control data includes the feedback information (downlink channel state information (CQI, PMI, RI), ACK/NACK feedback information for downlink data), etc., supplied from the mobile station apparatus 200.

The higher layer 108 executes processes of a packet data convergence protocol (PDCP) layer, a radio link control (RLC) layer, and a radio resource control (RRC) layer. Since the higher layer 108 integrally controls the processing portions of the lower layers, interfaces exist between the higher layer 108 and the scheduling portion 104, the antenna portion A1, the wireless portion 103, the channel estimating portion 105, the DFT-S-OFDM demodulating portion 106, the data control portion 101, the OFDM modulating portion 102, and the data extracting portion 107. However, not depicted.

The higher layer 108 has a radio resource control portion 109. The radio resource control portion 109 performs management of various configuration information, management of system information, management of measurement configuration and measurement result, paging control, management of communication states of respective mobile station apparatuses, management of migration such as handover, management of buffer status for each mobile station apparatus, management of connection setup of unicast and multicast bearers, management of mobile station identifier (UEID), etc. The higher layer 108 gives/receives information to/from another base station apparatus and information to/from a higher node.

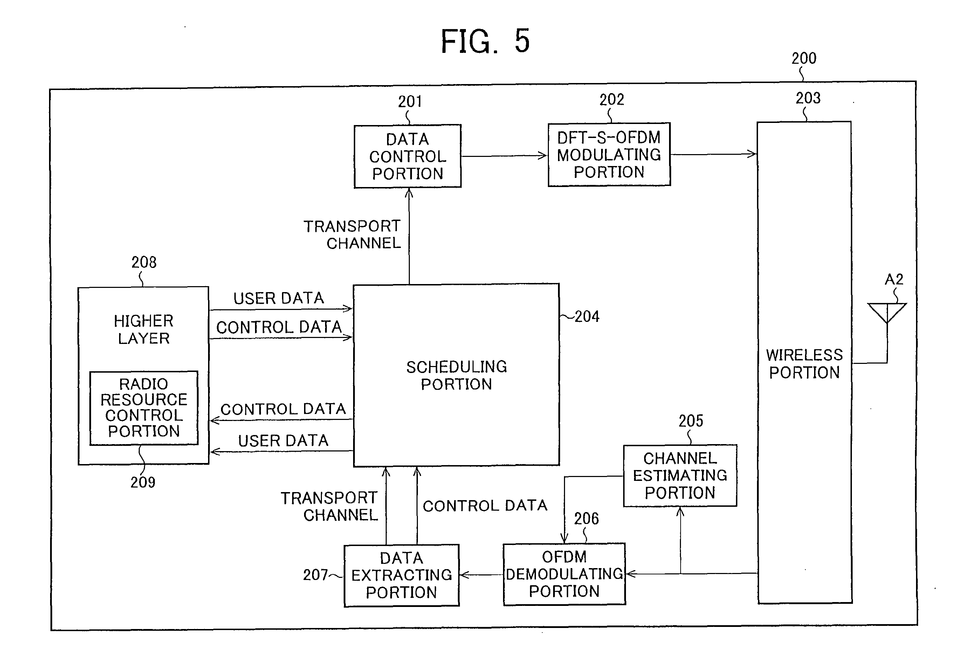

Fig. 5 is a general block diagram of a configuration of the mobile station apparatus 200 according to the first embodiment of the present invention. The mobile station apparatus 200 includes a data control portion 201, a DFT-S-OFDM modulating portion 202, a wireless portion 203, a scheduling portion 204, a channel estimating portion 205, an OFDM demodulating portion 206, a data extracting portion 207, a higher layer 208, and an antenna portion A2.

A transmitting portion is made up of the data control portion 201, the DFT-S-OFDM modulating portion 202, the wireless portion 203, the scheduling portion 204, the higher layer 208, and the antenna portion A2. A receiving portion is made up of the wireless portion 203, the scheduling portion 204, the channel estimating portion 205, the OFDM demodulating portion 206, the data extracting portion 207, the higher layer 208, and the antenna portion A2. A selecting portion is made up of the scheduling portion 204.

The antenna portion A2, the data control portion 201, the DFT-S-OFDM modulating portion 202, and the wireless portion 203 execute processes of the uplink physical layer. The antenna portion A2, the wireless portion 203, the channel estimating portion 205, the OFDM demodulating portion 206, and the data extracting portion 207 execute processes of the downlink physical layer. Each of the transmitting portion and the receiving portion is partially configured to separately execute a process for each component carrier and is partially configured to execute a common process between component carriers.

The data control portion 201 acquires the transport channels from the scheduling portion 204. The data control portion 201 maps the transport channels as well as signals and channels generated in the physical layer based on the scheduling information input from the scheduling portion 204, to the physical channels based on the scheduling information input from the scheduling portion 204. The data mapped as described above are output to the DFT-S-OFDM modulating portion 202.

The DFT-S-OFDM modulating portion 202 executes DFT-S-OFDM signal processes such as data modulation, DFT process, sub-carrier mapping, an inverse fast Fourier transform (IFFT) process, insertion of cyclic prefix (CP), and filtering for the data input from the data control portion 201 to generate and output a DFT-S-OFDM signal to the wireless portion 203.

Although it is assumed that the communication mode of the uplink is a single carrier mode such as DFT-S-OFDM, a multicarrier mode such as OFDM mode may also be used.

The wireless portion 203 up-converts the modulated data input from the DFT-S-OFDM modulating portion 202 to a wireless frequency to generate and transmit a wireless signal via the antenna portion A2 to the base station apparatus 100.

The wireless portion 203 receives a wireless signal modulated with the downlink data from the base station apparatus 100 via the antenna portion A2 and down-converts the signal to a baseband signal to output the reception data to the channel estimating portion 205 and the OFDM demodulating portion 206.

The scheduling portion 204 executes a process of the medium access control layer. The scheduling portion 104 performs the mapping of the logical channels and the transport channels, the scheduling of the downlink and the uplink (such as HARQ process and selection of transport format), etc. Since the scheduling portion 104 integrally controls the processing portions of the respective physical layers, interfaces exist between the scheduling portion 104 and the antenna portion A2, the data control portion 201, the DFT-S-OFDM modulating portion 202, the channel estimating portion 205, the OFDM demodulating portion 206, the data extracting portion 207, and the wireless portion 203. However, not depicted.

In the scheduling of the downlink, the scheduling portion 204 executes the generation of the scheduling information used in the reception control of the transport channels and the physical signals and physical channels, the HARQ retransmission control, and the downlink scheduling, based on the scheduling information from the base station apparatus 100 and the higher layer 208 (the transport format and the HARQ retransmission information). The scheduling information used for the downlink scheduling is output to the data control portion 201 and the data extracting portion 207.

In the scheduling of the uplink, the scheduling portion 204 executes the generation of the scheduling information used in the scheduling process for mapping the uplink logical channels input from the higher layer 208 to the transport channels and the uplink scheduling, based on the uplink buffer status input from the higher layer 208, the uplink scheduling information from the base station apparatus 100 input from the data extracting portion 207 (the transport format and the HARQ retransmission information), and the scheduling information input from the higher layer 208.

For the uplink transport format, the information supplied from the base station apparatus 100 is utilized. The scheduling information is output to the data control portion 201 and the data extracting portion 207.

The scheduling portion 204 maps the uplink logical channels input from the higher layer 208 to the transport channels before outputs to the data control portion 201. The scheduling portion 204 also outputs the downlink channel state information (CQI, PMI, RI) input from the channel estimating portion 205 and the CRC confirmation result input from the data extracting portion 207 to the data control portion 201.

The scheduling portion 204 processes the control data acquired through the downlink and the transport channels input from the data extracting portion 207 as needed and maps the control data and the transport channels to the downlink logical channels before output to the higher layer 208.

The channel estimating portion 205 estimates a downlink channel state from a downlink reference signal (RS) for the demodulation of downlink data and outputs the estimation result to the OFDM demodulating portion 206.

The channel estimating portion 205 also estimates a downlink channel state from the downlink reference signal (RS) for notifying the base station apparatus 100 of the downlink channel state (wireless propagation channel state) and converts the estimation result into the downlink channel sate information (such as channel quality information) before output to the scheduling portion 204. The channel estimating portion 205 outputs the measurement result of the downlink reference signal (RS) to a radio resource control portion 209 to notify the base station apparatus 100 of the downlink measurement result.

The OFDM demodulating portion 206 executes the OFDM demodulation process for the modulated data input from the wireless portion 203 based on the downlink channel state estimation result input from the channel estimating portion 205 and outputs the data to the data extracting portion 207.

The data extracting portion 207 performs the cyclic redundancy check (CRC) for the data input from the OFDM demodulating portion 206 to confirm the correctness and outputs the confirmation result (ACK/NACK feedback information) to the scheduling portion 204.

The data extracting portion 207 divides the data input from the OFDM demodulating portion 206 into the transport channels and the physical layer control data based on the scheduling information from the scheduling portion 204 before outputs to the scheduling portion 204. The divided control data includes the scheduling information such as downlink or uplink resource allocation and uplink HARQ control information. In this case, a decoding process is executed for the search space (also called search area) of the physical downlink control signal (PDCCH) to extract the downlink or uplink resource allocation, etc., intended for its own station.

The higher layer 208 executes processes of the packet data convergence protocol (PDCP) layer, the radio link control (RLC) layer, and the radio resource control (RRC) layer. The higher layer 208 has the radio resource control portion 209. Since the higher layer 208 integrally controls the processing portions of the lower layers, interfaces exist between the higher layer 208 and the scheduling portion 204, the antenna portion A2, the data control portion 201, the DFT-S-OFDM modulating portion 202, the channel estimating portion 205, the OFDM demodulating portion 206, the data extracting portion 207, and the wireless portion 203. However, not depicted.

The radio resource control portion 209 performs management of various configuration information, management of system information, management of measurement configuration and measurement result, paging control, management of communication states of its own station, management of migration such as handover, management of buffer status, management of connection setup of unicast and multicast bearers, and management of mobile station identifier (UEID).

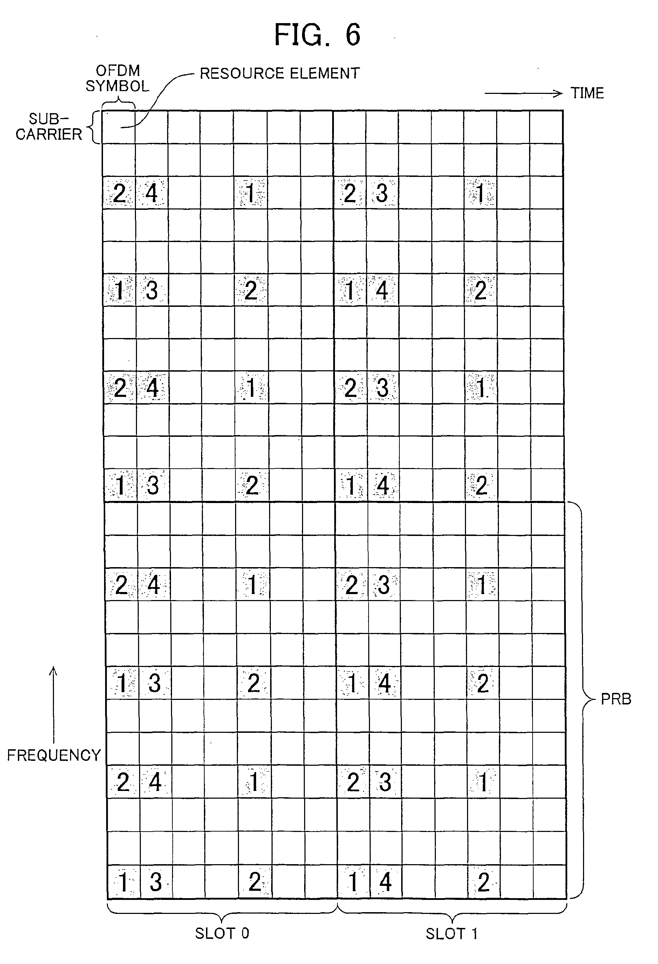

Fig. 6 is a diagram of details of a downlink reference signal (in the case of four logical antenna ports) according to the present invention. As depicted, the EUTRA system with four logical antenna ports has a downlink reference signal disposed at first, second, and fifth OFDM symbols of each slot. The downlink reference signal is disposed every three sub-carriers (every six sub-carriers for each logical antenna ports). However, the sub-carrier position of the downlink reference signal is shifted in the sub-carrier direction and disposed at a position specific to a cell based on a physical cell ID specified from the downlink synchronization signal. Although the downlink reference signal is disposed in such a configuration in a normal sub-frame, another downlink reference signals may be disposed at a specific sub-frame such as a sub-frame for MBMS.

In the case of four logical antenna ports, the reference signals of the first and second logical antenna ports are disposed at the first and fifth OFDM symbols, and the reference signals of the third and fourth logical antenna ports are disposed at the second OFDM symbol. In the case of two logical antenna ports, the reference signals of the first and second logical antenna ports are disposed at the first and fifth OFDM symbols. In the case of one logical antenna port, the reference signal of the first logical antenna port is disposed at the first OFDM symbol and is disposed every six sub-carriers. The number of logical antenna ports is one, two, or four and is specified from the physical broadcast channel (PBCH). Physical antenna ports making up the logical antenna ports may not be the same and a plurality of array antennas etc., may make up one logical antenna port.

A mobile station apparatus in EUTRA uses these reference signals for both the measurement of the channel state information and the downlink data demodulation. SIR (Signal-to-Interference Ratio), SINR (Signal-to-Interference plus Noise Ratio), SNR (Signal-to-Noise Ratio), CIR (Carrier-to-Interference Ratio), BLER (Block Error Rate), path-loss, etc., are used as the measurement indicator of the channel state information. When measuring the channel state information, the mobile station apparatus determines and transmits RI from the measurement indicator of the channel state information of the logical antenna ports. The mobile station apparatus identifies a sub-set of a code book of a selectable precoding matrix based on the transmitted RI and selects PMI that most improves the measurement indicator of the channel state information from the code book sub-set of the precoding matrix. When measuring CQI, the mobile station apparatus selects a value of CQI such that the error probability does not exceeds 0.1 in a transport block specified by a modulation mode and transport block size depending on a value of CQI. If the mobile station apparatus performs the feedback of RI and/or the feedback of PMI, the mobile station apparatus measures CQI on the assumption that data is transmitted with the RI and/or PMI. When a resource is assumed based on the interpretation of the transport block preventing the error provability from exceeding 0.1 at the time of measurement of RI; PMI, and CQI, this resource is referred to as a CQI reference resource. The CQI reference resource is defined by a PRB group related to a frequency bandwidth for measuring CQI in the frequency direction and by one sub-frame in the time direction.

On the other hand, if a reference signal for higher-order MIMO is newly added to a system configured with one to four logical antenna ports as described above, the reference signal is added to a resource element disposed with data. A mobile station apparatus in EUTRA or a mobile station apparatus not recognizing the introduction of higher-order MIMO considers that data is disposed and demodulates without regard to the added reference signal. In this case, the data of the resource element having the reference signal added cannot correctly be demodulated and must be compensated by error detection, an error correction process, and an HARQ process. However, if an amount of the added reference signal is not so large, data can be recovered by an error correction process.

If the mobile station apparatuses using the higher-order MIMO are limited to mobile station apparatuses having low mobility in a status with less propagation channel fluctuations, a high temporal density is not required for measuring the channel state information. For a frequency density, a density as high as that of EUTRA reference signals is not required given that CQI is measured for each sub-band. A high-density reference signal may be added only when a mobile station apparatus demodulates downlink data. Therefore, a reference signal used for measuring the channel state information will hereinafter be referred to as CQI-RS, and a reference signal used for demodulating downlink data will hereinafter be referred to as DM-RS. For the mobile station apparatuses in EUTRA, both CQI-RS and DM-RS are the same reference signals (however, a logical antenna port 5 in EUTRA is specific to a mobile station apparatus and is used only for DM-RS).

To make the time/frequency densities of CQI-RS sparse, the respective logical antenna ports are disposed in limited sub-frames. The sub-carrier interval of CQI-RS is set to the extent of two per PRB (every six sub-carriers), one per PRB (every twelve sub-carriers), or one per three PRBs (every 36 sub-carriers). Only a mobile station apparatus using the higher-order MIMO, a mobile station apparatus capable of using the higher-order MIMO, or a mobile station apparatus of Advanced-EUTRA is notified of the position of the added CQI-RS. The mobile station apparatus recognizing the added reference signal performs decoding on the assumption that no data is disposed at a resource'element having the added reference signal disposed. When disposing data at a resource element, the base station apparatus disposes no data at a resource element having the added reference signal disposed. Since the respective resource blocks are scheduled for each mobile station apparatus, the data disposing method can be differentiated between a mobile station apparatus recognizing an added reference signal and a mobile station apparatus not recognizing the signal. Alternatively, to simplify the design, the mobile station apparatus recognizing the added reference signal considers that data is disposed and performs decoding without distinguishing the resource element having the added reference signal disposed, as is the case with a mobile station apparatus in EUTRA. In this case, when disposing data at a resource element, the base station apparatus punctures the data to be disposed along with the added reference signal.

On the other hand, DM-RS can be disposed using a method specific to each mobile station apparatus and is disposed at a necessary amount of resource elements in accordance with the number of streams (rank) at the time of scheduling.

The mobile station apparatus uses the reference signals of Fig. 6 disposed in the respective sub-frames for measuring the channel states of a logical antenna port 1, a logical antenna port 2, a logical antenna port 3, and a logical antenna port 4 (in this example, the logical antenna port 1 to the logical antenna port 4 are assumed to be first logical antenna ports). On the other hand, the sub-frames disposed with the reference signals for the higher-order MIMO of a logical antenna port 5, a logical antenna port 6, a logical antenna port 7, and a logical antenna port 8 (in this example, the logical antenna port 5 to the logical antenna port 8 are assumed to be second logical antenna ports) are broadcasted by using the broadcast information channel (BCCH) or supplied to individual mobile station apparatuses from the base station apparatus through RRC signaling of the common control channel (CCCH) and/or the dedicated control channel (DCCH). Since all the base station apparatuses performing the higher-order MIMO basically use the same CQI-RS, it is desirable to broadcast the sub-frames disposed with the reference signals for the higher-order MIMO. The system information broadcasted by the broadcast information channel (BCCH) is included and transmitted in an extended area (reserved area) of the system information so as not to be read by the existing mobile station apparatuses in EUTRA. However, if a mobile station apparatus is notified in advance at the time of handover or if the number of mobile station apparatuses performing the higher-order MIMO is extremely few, the RRC signaling is also efficiently used. The RRC signaling is also used for the base station apparatus notifying the mobile station apparatus of whether the higher-order MIMO is performed.

Several methods exist for the notification of sub-frames disposed with the reference signals for the higher-order MIMO. When the higher-order MIMO is always used, if the number of the logical antenna ports is defined as up to eight, the number of the logical antenna ports to be added (the second logical antenna ports) is 8-n. Where n is the number of the logical antenna ports for EUTRA (the first logical antenna ports) identified by the physical broadcast channel (PBCH). Therefore, the mobile station apparatus identifies the number of the logical antenna ports to be added from the number of the logical antenna ports for EUTRA. If the number of logical antenna ports is variable when the higher-order MIMO is used, notification is given of the number of the logical antenna ports to be added or the number of the logical antenna ports in the case of using the higher-order MIMO. As a result, the mobile station apparatus can identify the number of the logical antenna ports to be added.

When identifying the number of the logical antenna ports to be added or the number of the logical antenna ports in the case of using the higher-order MIMO, the mobile station apparatus set by the base station apparatus to use the higher-order MIMO determines the sub-frames disposed with CQI-RS by applying a rule, such as starting disposition in sub-frames in one wireless frame of 10 ms in the order from the top, to the number of the logical antenna ports to be added. For example, if the number of the logical antenna ports to be added is six, the mobile station apparatus determines that the logical antenna port 3, the logical antenna port 4, the logical antenna port 5, the logical antenna port 6, the logical antenna port 7, and the logical antenna port 8 are disposed in a sub-frame #0, a sub-frame #1, a sub-frame #2, a sub-frame #3, a sub-frame #4, and a sub-frame #5, respectively. In this way, the respective logical antenna ports 3 to 8 are disposed at a rate of once per 10 ms. Alternatively, a plurality of logical antenna ports can be added to one sub-frame. In this case, for example, if the number of the logical antenna ports to be added is six, the mobile station apparatus determines that the logical antenna ports 3 and 4, the logical antenna ports 5 and 6, and the logical antenna ports 7 and 8 are disposed in the sub-frame #0, the sub-frame #1, and the sub-frame #2, respectively.

Alternatively, CQI-RS may be disposed every two wireless frames. In this case, for example, a rule is applied such that CQI-RS is disposed in even-numbered wireless frames. A rule may be applied such that CQI-RS is disposed every three sub-frames rather than in consecutive sub-frames. The sub-frames disposed with CQI-RS may be represented by a bit map. For example, if a bit map is represented as 0101010111 for sub-frames 0 to 9, the sub-frames 1, 3, 5, 7, 8, and 9 are specified sub-frames. For example, when the sub-frames disposed with CQI-RS is identified by a bit map, the logical antenna ports to be added are disposed in the respective sub-frames in the order from the top. Identification information may be supplied that indicates a relationship between a logical antenna port and a sub-frame disposed with CQI-RS of the logical antenna port.

By configuring the system information as described above, the position of CQI-RS can be recognized by the mobile station apparatus with smaller overhead. The base station apparatus disposes and transmits CQI-RS in locations recognized by the mobile station apparatus. If a sub-frame for MBMS or a sub-frame reserved by the base station apparatus is set in another system information, the mobile station apparatus determines that CQI-RS is not disposed in that sub-frame. In other words, a sub-frame for MBMS or a sub-frame reserved by the base station apparatus is prioritized.

These arrangements for identifying CQI-RS for the higher-order MIMO are applicable to CQI-RS in CoMP. In other words, when a mobile station apparatus set to a mode of CoMP identifies the number of the logical antenna ports to be added or the number of the logical antenna ports in the case of using CoMP, the mobile station apparatus applies the rules described above to determine sub-frames disposed with CQI-RS. As described above, utilizing the arrangements same as the case of the higher-order MIMO enables the reduction of the system information and the simplified implementation of the mobile station apparatuses. Furthermore, the sub-frames same as CQI-RS for the higher-order MIMO may be set as CQI-RS for CoMP.

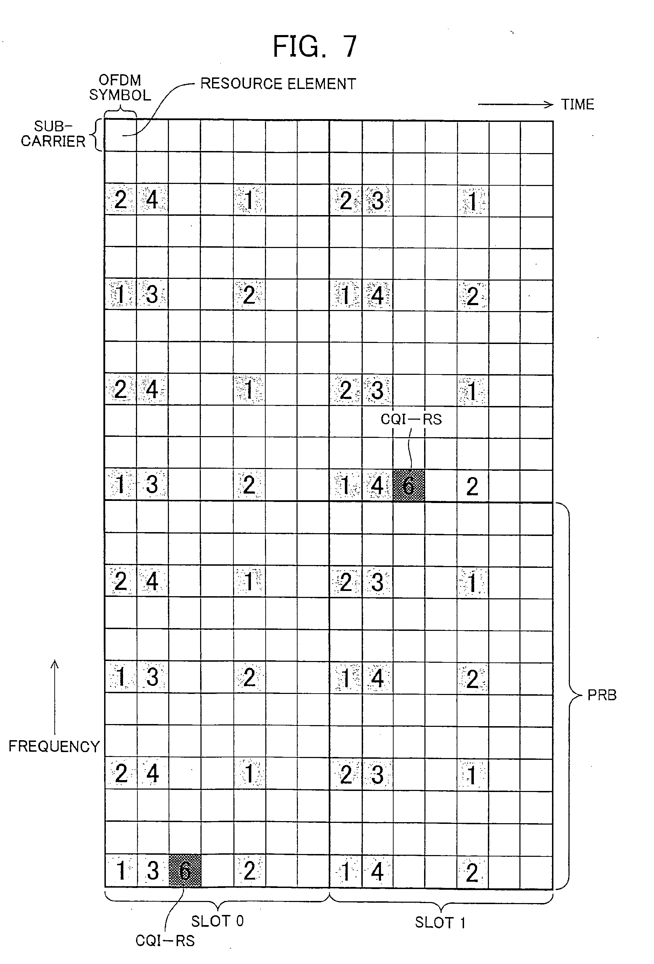

A disposition example of CQI-RS in a resource block is depicted in Fig. 7. In this example, CQI-RS of the logical antenna port 6 is disposed at the first sub-carrier of the third OFDM symbol of each PRB. Since the third OFDM symbol is a symbol disposed with no reference signal of the first logical antenna ports, the third OFDM symbol is not affected by the contention with reference signals of adjacent cells and the power boost of the first logical antenna ports. The CQI-RS of the logical antenna port 6 is disposed only in a slot 0 in the even-numbered PRB and is disposed only in a slot 1 in the odd-numbered PRB. The effect on existing mobile station apparatuses can be suppressed and the overhead due to the reference signals may be reduced by sparsely disposing CQI-RS in terms of time and frequency between slots and between PRBs (the reference signals of the second logical antenna ports are disposed at resource elements at wider intervals than the frequency/time intervals of resource elements at which the reference signals of the first logical antenna ports are disposed. Alternatively, the reference signals of the second logical antenna ports are disposed in sub-frames at longer intervals than the intervals of sub-frames at which the reference signals of the first logical antenna ports are disposed). Since a mobile station apparatus performing the higher-order MIMO is supposed to be a mobile station apparatus in an environment with less temporal fluctuations, the disposition specialized to the measurement of frequency fluctuations is achieved by disposing CQI-RS at different sub-carriers between slots. Other configurations may obviously be available such as disposing CQI-RS at the first sub-carrier of the slot 0 in each PRB and the seventh sub carrier of the slot 1 in each PRB, or disposing CQI-RS in PRB that is a multiple number of three and the slot 0 as well as in PRB that is a multiple number of three plus one and the slot 1.

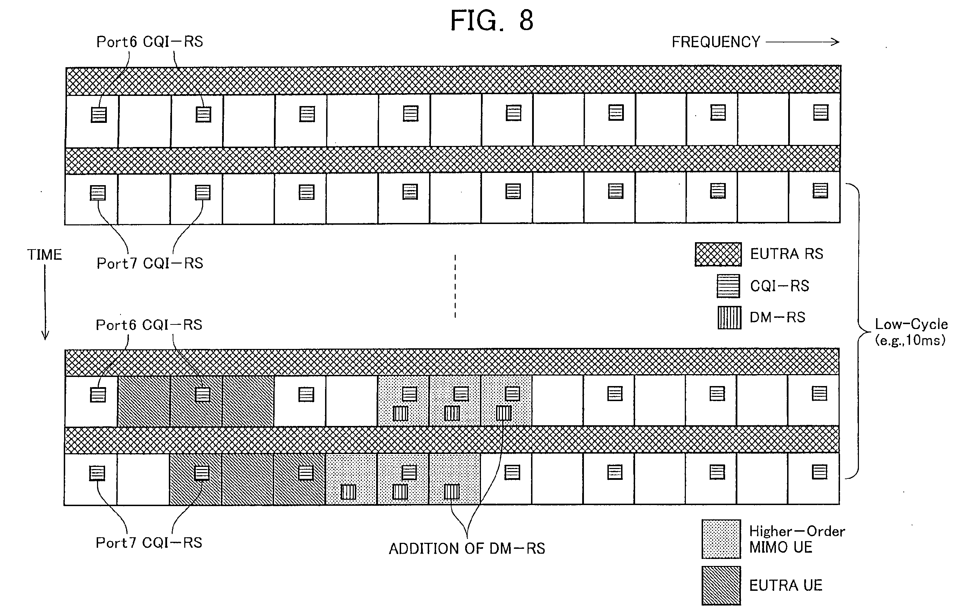

Fig. 8 is a conceptual diagram of the addition of CQI-RS and DM-RS. Each sub-frame is disposed with a reference signal for EUTRA. CQI-RSs of the logical antenna port 6 and the logical antenna port 7 are disposed in different sub-frames at intervals of 10 ms. DM-RS is also added to PRB scheduled for a mobile station apparatus of the higher-order MIMO. As described above, although a mobile station apparatus not recognizing an added reference signal is also scheduled for a sub-frame with CQI-RS added, the punctured data is resolved by error correction or HARQ. This problem is also resolved by a method such as not scheduling by the base station apparatus a mobile station apparatus not recognizing an added reference signal for a sub-frame disposed with the added reference signal.

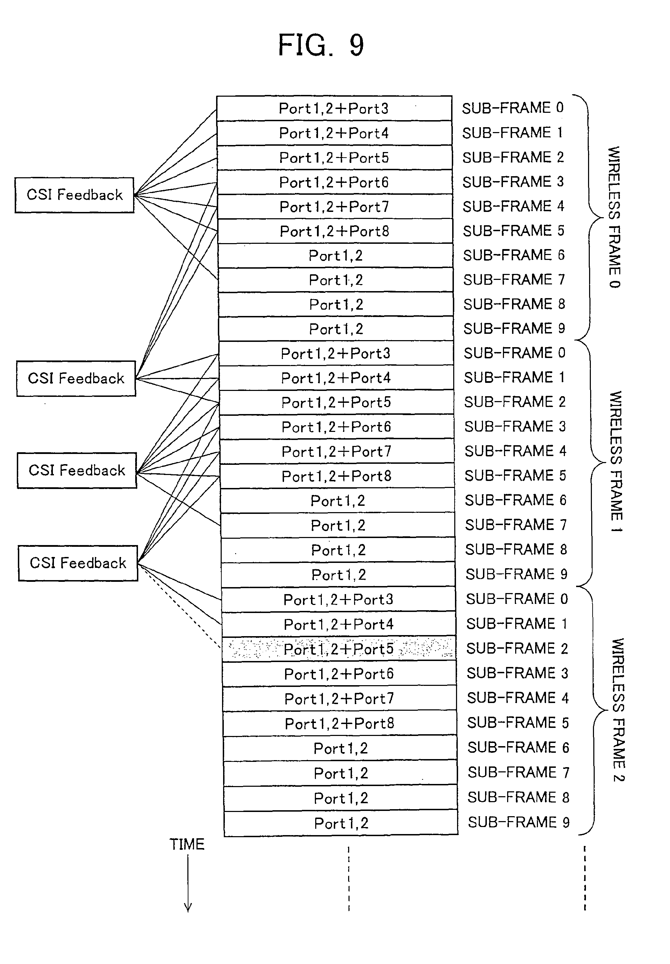

Fig. 9 is a diagram of an example of a method of measuring the channel state information. In EUTRA, a reference signal preceding by at least four or more sub-frames is used for CQI-RS for measuring the channel state information in consideration of a processing time of a mobile station apparatus. In other words, for a sub-frame n for transmitting the channel state information, a reference signal to be used is that of an effective sub-frame that is a sub-frame (n-4) or a sub-frame preceding the sub-frame (n-4). The effective sub-frame means a sub-frame that is not a sub-frame reserved for MBSFN in a cell, a sub-frame not set as a measurement gap for a mobile station apparatus, a sub-frame set as a downlink sub-frame in the case of TDD, etc. This sub-frame assumed for measuring the channel state acts as a CQI reference resource in the time direction. However, CQI-RS added for the higher-order MIMO or CoMP is not disposed in all the sub-frames and CQI-RS is disposed in a different sub-frame for each logical antenna port. Therefore, the mobile station apparatus capable of utilizing the higher-order MIMO or CoMP includes a mechanism of retaining a reception signal of CQI-RS (a buffer that stores received CQI-RS) and the mobile station apparatus set to the higher-order MIMO or CoMP retains a reception signal of CQI-RS for each logical antenna port.

Therefore, a reference signal of each logical antenna port of a plurality of the logical antenna ports used for measuring the channel state is defined as a reference signal of the nearest effective sub-frame disposed with a reference signal of each of the logical antenna ports among sub-frames preceding the sub-frame specified for the transmission of the channel state information by a certain number of sub-frames. However, for a reference signal for EUTRA, a reference signal of each logical antenna port of a plurality of the logical antenna ports used for measuring the channel state is defined as a reference signal of the nearest effective sub-frame among sub-frames preceding the sub-frame specified for the transmission of the channel state information by a certain number of sub-frames. In this case, the assumed CQI reference resource in the time direction is defined as the nearest effective sub-frame among sub-frames preceding the sub-frame specified for the transmission of the channel state information by a certain number of sub-frames, as is the case with EUTRA. The mobile station apparatus measures the channel state by using this assumed CQI reference resource in the time direction to assume a transport block for the channel state measurement based on a signal state of a reference signal of a logical antenna port before the CQI reference resource in the time direction.

For example, as depicted in Fig. 9, the reference signal for EUTRA is set to the logical antenna port 1 and the logical antenna port 2, and CQI-RSs of the logical antenna port 3, the logical antenna port 4, the logical antenna port 5, the logical antenna port 6, the logical antenna port 7, and the logical antenna port 8 are added to the sub-frame 0, the sub-frame 1, the sub-frame 2, the sub-frame 3, the sub-frame 4, and the sub-frame 5, respectively. If the channel state information is transmitted in the sub-frame 1 of the wireless frame 1, the mobile station apparatus measures the channel state information by using the logical antenna port 1 and the logical antenna port 2 disposed in the sub-frame 7 of the wireless frame 0 (a sub-frame preceding by four sub-frames), and the CQI-RS disposed in the sub-frame 7 of the wireless frame 0 or the nearest effective sub-frame disposed with each of the logical antenna ports among sub-frames preceding the sub-frame 7 of the wireless frame 0 (i.e., the logical antenna port 3, the logical antenna port 4, the logical antenna port 5, the logical antenna port 6, the logical antenna port 7, and the logical antenna port 8 respectively disposed in the sub-frame 0, the sub-frame 1, the sub-frame 2, the sub-frame 3, the sub-frame 4, and the sub-frame 5 of the wireless frame 0). The mobile station apparatus reports the measured channel state information to the base station apparatus.

If the sub-frame 2 of the wireless frame 2 is not an effective frame and if the channel state information is transmitted in the sub-frame 6 of the wireless frame 2, the mobile station apparatus measures the channel state information by using the logical antenna port 1 and the logical antenna port 2 disposed in the sub-frame 1 of the wireless frame 2 (the nearest effective sub-frame preceding by four or more sub-frames), and the CQI-RS disposed in the sub-frame 2 of the wireless frame 2 or the nearest effective sub-frame disposed with each of the logical antenna ports among sub-frames preceding the sub-frame 2 of the wireless frame 0 (i.e., the logical antenna port 3, the logical antenna port 4, the logical antenna port 5, the logical antenna port 6, the logical antenna port 7, and the logical antenna port 8 respectively disposed in the sub-frame 0 of the wireless frame 2, the sub-frame 1 of the wireless frame 2, the sub-frame 2 of the wireless frame 1, the sub-frame 3 of the wireless frame 1, the sub-frame 4 of the wireless frame 1, and the sub-frame 5 of the wireless frame 1). The mobile station apparatus reports the measured channel state information to the base station apparatus.

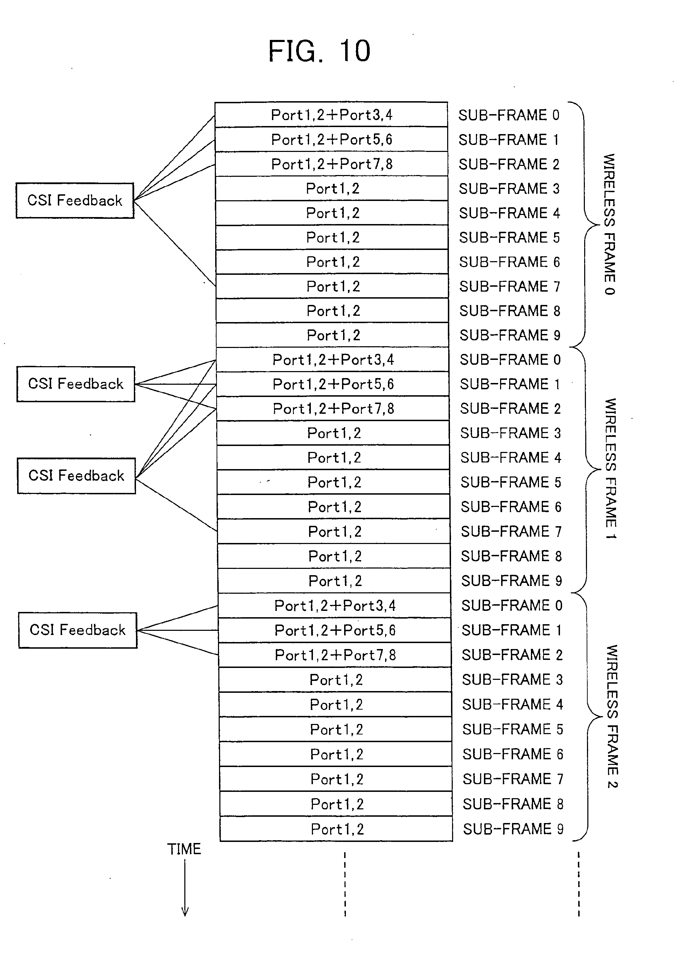

Fig. 10 is a diagram of another example of a method of measuring the channel state information. For example, as depicted in Fig. 10, the reference signal for EUTRA is set to the logical antenna port 1 and the logical antenna port 2, and CQI-RSs of the logical antenna ports 3 and 4, the logical antenna ports 5 and 6, and the logical antenna ports 7 and 8 are added to the sub-frame 0, the sub-frame 1, and the sub-frame 2, respectively. In this case, since CQI-RSs of a plurality of the logical antenna ports are disposed in one sub-frame, the mobile station apparatus may retain reception signals of CQI-RS on the basis of a plurality of the logical antenna ports, instead of retaining a reception signal of CQI-RS for each logical antenna port.

Although the case of periodic report is described with reference to Figs. 9 and 10, a similar process is executed in the case of non-periodic report. When the mobile station apparatus detects a CQI request through the physical downlink control channel (PDCCH) received in a sub-frame n, the mobile station apparatus transmits a non-periodic report of CQI and/or RI and/or PMI to the base station apparatus through the physical uplink shared channel (PUSCH) in a sub-frame n+k. Although k is four in the case of FDD, this is varied depending on the sub-frame settings of downlink and uplink in the case of TDD. In this case, a reference signal of each logical antenna port of a plurality of the logical antenna ports used for measuring the channel state is defined as a reference signal of the nearest effective sub-frame disposed with a reference signal of each of the logical antenna ports, which is a sub-frame n in which a CQI request requesting the transmission of the channel state information is detected or a preceding sub-frame n-j.

The mobile station apparatus set to the higher-order MIMO or CoMP may be controlled to use such a filter that increases the effect of a reference signal of a logical antenna port disposed in the closest sub-frames (such as increasing the electric power and SN of a temporally closer logical antenna port and decreasing the electric power and SN of a temporally farther logical antenna port) depending on the positions of the sub-frames disposed with the respective logical antenna ports when measuring RI feedback and/or PMI and/or CQI. Therefore, although the mobile station apparatus measures the channel state by using the CQI reference resource to assume a transport block for the channel state measurement based on a signal state of a reference signal of a logical antenna port before the CQI reference resource in the time direction, the assumption is made in consideration of temporal effects when assuming the transport block for the channel state measurement based on a signal state of a reference signal of a logical antenna port before the CQI reference resource in the time direction.

For example, description will be made of the case that the number of logical antenna ports is eight and that the number of code words is two. When respective reception signals of eight logical antenna ports of an arbitrary resource element (RE) are s1, s2, s3, s4, s5, s6, s7, and s8; a reception signal vector s is s=[s1 s2 s3 s4 s5 s6 s7 s8]^{T} (where T denotes a transposed matrix) ; R denotes a precoding matrix; and W denotes a reception weighting matrix, reception signals c1 and c2 of two code words in this RE can be calculated from c=[c1 c2]^{T} as c=R⁻¹WAs. "A" denotes a diagonal matrix having coefficients (α1 to α8) of the respective ports as diagonal components and the respective coefficients are defined such that a coefficient of a temporally closer logical port becomes larger while a coefficient of a temporally farther logical port becomes smaller. The process same as the reception signal vector can be executed for noise vector to obtain noise signal power of two code words in this RE. When the reception signal power (the square of an absolute value of a reception signal) and the noise power of two code words obtained in this way are calculated for a plurality of REs and added to calculate the sums of the reception signal powers and the noise powers (for the CQI reference resources of transport blocks corresponding to the respective code words), RI feedback and/or PMI and/or CQI can be measured in consideration of fluctuations in the time direction. This improves the probability of acquiring an accurate measurement result even if sub-frames are temporally distant.

In this way, the mobile station apparatus can automatically identify CQI-RS without giving instructions from the base station apparatus and measure the channel state information and feed back the channel state information using the latest CQI-RS depending on the situation. Since the base station apparatus can comprehend the time point of the reference signal used by the mobile station apparatus for reporting the measurement result, the base station apparatus can know important information in advance when internally using filtering or predicting channel fluctuations.

In each of the above embodiments, pluralities of base station apparatuses and mobile station apparatuses may exist. A mobile station apparatus is not limited to a moving terminal and may be realized by implementing the function of the mobile station apparatus in an information terminal, a base station apparatus, or a fixed terminal, and so on.

In each of the embodiments described above, a program for implementing the respective functions in the base station apparatus or the respective functions in the mobile station apparatus may be recorded in a computer readable recording medium and the program recorded in this recording medium may be read and executed by a computer system to control the base station apparatus or the mobile station apparatus. A "computer system" as used herein is assumed to include OS and hardware such as peripherals.

A "computer readable recording medium" means a portable medium such as a flexible disk, a magnetic optical disk, ROM, or CD-ROM, and a storage device such as a hard disk built into a computer system. A "computer readable recording medium" is assumed to include those dynamically retaining a program for a short time like a network such as the internet and communication wires when a program is transmitted through a communication line such as a telephone line, and those retaining a program for a certain time like a volatile memory within a computer system acting as a server or a client in such a case. The above program may be for the purpose of implementing a portion of the aforementioned functions and may be a program capable of implementing the aforementioned functions in combination with a program already recorded in a computer system.

Although the embodiments of the present invention have been described in detail with reference to the drawings, specific configurations are not limited to the embodiments and the claims include designs etc., within a range not departing from the spirit of the present invention.

### Explanations of Reference Numerals

100...base station apparatus; 101...data control portion; 102...OFDM modulating portion; 103...wireless portion; 104...scheduling portion; 105...channel estimating portion; 106...DFT-S-OFDM demodulating portion; 107...data extracting portion; 108...higher layer; 200...mobile station apparatus; 201...data control portion; 202...DFT-S-OFDM modulating portion; 203...wireless portion; 204...scheduling portion; 205...channel estimating portion; 206...OFDM demodulating portion; 207...data extracting portion; 208...higher layer; A1, A2...antenna portion; 10001...base station apparatus; 10002...base station apparatus; 11...transmitting portion; 21...transmitting portion; 22...transmitting portion; 300...control station.

## Claims

1. A mobile communication system comprised of a base station apparatus and a mobile station apparatus, wherein
the one or more base station apparatuses dispose a reference signal of each one or more logical antenna ports of one or more logical antenna ports in different sub-frames,
the mobile station apparatus measures a channel state by using a reference signal of each logical antenna port of the one or more logical antenna ports to.

2. A mobile communication system comprised of a base station apparatus and a mobile station apparatus, wherein
the base station apparatus broadcasts number of logical antenna ports,
the mobile station apparatus identifies a sub-frame disposed with a reference signal of each logical antenna port of one or more logical antenna ports from the broadcasted number of logical antenna ports.

3. A mobile station apparatus in a mobile communication system comprised of a base station apparatus and the mobile station apparatus, wherein
a reference signal of each one or more logical antenna ports of one or more logical antenna ports being disposed in different sub-frames,
the mobile station apparatus measures a channel state by using a reference signal of each logical antenna port of the one or more logical antenna ports to.

4. A mobile station apparatus in a mobile communication system comprised of a base station apparatus and the mobile station apparatus, wherein
a reference signal of each one or more logical antenna ports of one or more logical antenna ports being disposed in different sub-frames,
the mobile station apparatus identifies a sub-frame disposed with a reference signal of each logical antenna port of the one or more logical antenna ports from number of logical antenna ports broadcasted from the base station apparatus.
